# EUROPEAN PATENT APPLICATION

(11) **EP 0 912 025 A2**
(43) Date of publication of application: **28.04.1999**
(21) Application number: 98308042.5
(22) Date of filing: 02.10.1998
(51) Int. Cl.: H04L 29/06, H04L 29/14

(54) **Data communications error recovery**

(30) Priority: 06.10.1997 JP 272670/97
(71) Applicant: Toshiba Corporation, Kawasaki-shi, Kanagawa-ken (JP)
(72) Inventor: Iinuma, Tetsuya, 1-1-1 Shibaura, Minato-ku Tokyo (JP); Tanaka, Kuninori, 1-1-1 Shibaura, Minato-ku Tokyo (JP); Hirayama, Hideaki, 1-1-1 Shibaura, Minato-ku Tokyo (JP); Shirakihara, Toshio, 1-1-1 Shibaura, Minato-ku Tokyo (JP)
(74) Representative: Shindler, Nigel

(57) **Abstract**

The object of the invention is to provide a system and a method for recovering from the communication trouble in the communication system, which can recover from the communication trouble and continue the communication process, by suppressing the change of the communication situation from the communication program and without having the communication program know that a communication trouble took place.

The respective computers 11 (12) are provided with an real socket 112-1 (122-1) used as a port for performing the real communication process and a virtual socket 114-1 (124-1) which forms a pair of said real socket and when the communication program instructs the virtual socket to perform a data communication, the communication is performed using the real socket corresponding to said virtual socket, and at he same time a new real socket is formed while the real socket used at the time of the trouble is destroyed, and a correspondence is built between the newly formed real socket and the virtual socket used before the trouble and the data communication is continued using the newly formed real socket.

## Description

### BACKGROUND OF THE INVENTION

This invention relates to a communication system, which performs a data exchange between client-server programs, and especially to the system with a recovery function from communication trouble.

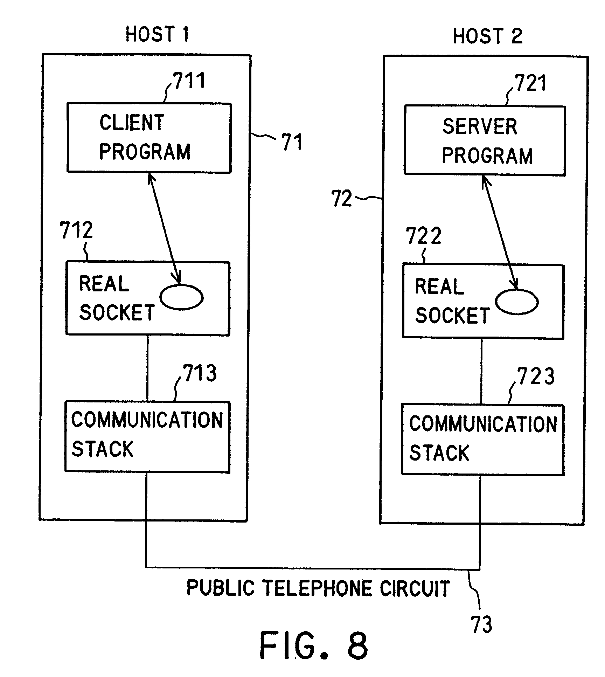

Fig.8 shows a communication system comprising the client-server of prior art. In this example, data exchange is made between the client-servers and the circuit connecting the both host machines is a public circuit, whereby a dial-up connection is made from the host 1 to the host 2 and then the communication is made.

The host 1 (71) is a computer, on which the client program 711 is activated. For example, said computer is portable information equipment such as a notebook personal computer. The host 2 (72 ) is a computer, in which server program 721 is operating and in this case a high capacity desk-top personal computer is assumed for the host.

The communication system shown here comprises three major components: communication programs (client program 711, server program 721), socket module 721 (722), communication stack 713 (723). At the communication stack 713 (723) the physical control of the public circuit and control for the communication protocol are performed. In the communication system shown here the communication using TCP/IP is performed; and when the dial-up connection from the Host 1 (71) to the host 2 (72) is made, the circuit is connected by PPP (Point-to-Point Protocol), and IP address of the Host 1 (71) is obtained from the host 2 (72) for the respective connections by means of address procurement method, such as DHCP (Dynamic Host Configuration protocol). These controls are carried out by the communication stack 713 (723).

The socket module 712 (722) is a module which connects the communication program 711 (721) and the communication stack, and provides an interface (API) for data sending/receiving, for the communication program without being aware of physical conditions of the circuit. For example, when the communication program 711 performs a connection to its opponent program 721 for sending data, the communication program calls up a service of the socket module 712 called CONNECT. Between the communication program 711 and the socket module, port for the delivery of data called SOCKET is used. The socket is formed at the starting of the communication session in the program. The socket module 712 calls up the communication stack 713 basing upon the data from the opponent program which was received from the communication program 711, and is connected to the opponent communication program 721 of the host 2 (72).

Also in the case that the communication program 721 is connected to the opponent program 711 for sending data, the communication program calls up the service of the socket module 722 called CONNECT. The socket module 722 performs a connection to the opponent communication program 711 of the host 1 (71), while calling up the communication stack 723 basing upon the data received from the communication program 721.

In this case, the communication program is not necessary of being aware, how the communication stack is activated, also, that the physical circuit is a public circuit 73. Therefore, the flow of data in case that the communication programs exchange data mutually, will be explained as follows:
Communication program 711 (721) --> Socket module 721 (722) --> Communication stack 713 (723) --> Public telephone circuit 73--> Opponent communication stack 723 (713)--> Opponent socket module 722 (712)--> Opponent communication program 721 (711)

In the meantime, in the system of prior art, when communication trouble such as fault in the public telephone circuit arises and the transmission of data is interrupted, it was not possible to restart the interrupted transmission of the data from the state just before the trouble occurrence, even if the communication trouble is deleted.

In other words, on case of the communication system of prior art, when the communication trouble is removed, one must dial up again, obtain IP address newly, form socket again, reconnect the sockets of the communication program, restart the program, which was interrupted by the communication trouble, send data from the beginning.

However, such reconnection procedures are complicated and a waste of time and the repeating of the data transmission results in an ineffectiveness of the communication

### BRIEF SUMMERY OF THE INVENTION

The invention is made in consideration of the above situations and an object of the invention is to provide a communication system and method, whereby the trouble of the communication can be removed and the processing can be continued, without having the communication programs recognize that trouble has occurred in communication, wherein re-dialing-up, obtaining IP address newly, rebuilding of the socket and re-connection between the sockets of the communication programs, which had to be done, when the communication trouble was removed, are carried out automatically, by communicating between real sockets, which are used as communication ports for carrying out the communication process through the virtual socket.

Regarding the communication system which is provided with a recovery function from the communication trouble according to the invention, in the data communication between the computers, each computer is provided with a virtual socket which corresponds to an real socket which is used as the communication port for carrying out the real communication process as a pair, wherein, when the communication program instructs the virtual socket to carry out a data communication, a real socket which functions as a pair of the virtual socket; computer performs the communication using said real socket; when the communication trouble arises, the used socket at the time of trouble occurrence is destroyed, a new socket is formed so as to form a pair corresponding to the virtual socket which was used before the trouble arose and the communication is continued by using the newly formed real socket.

As to the recording media of the invention, in the communication between the computers, each computer is provided with virtual socket corresponding to a real socket, which is used as a communication port, to form a pair, to perform an real communication process, wherein a step to detect the communication trouble at the real socket, a step to have the user of the program to decide, whether recovery shall be made or not, in the negative case, a step to have an error-process informing the communication program of the trouble, in the positive case to recover the connection, to destroy the socket which was used at the time of the occurrence of the trouble and to form a new real socket, to have the new real socket to correspond to the virtual socket, which was used before the time of trouble occurrence and a step to continue the data communication using the real socket newly formed are programmed and registered.

By this way, even if the trouble arises during the communication. it becomes possible for the communication program to recover from the communication trouble and the process can be continued.

### BRIEF DESCRIPTION OF THE DRAWINGS

Fig. 1 is a block diagram showing an embodiment of the invention.

Fig. 2 is a drawing for reference to explain the embodiment of the invention and shows the procedures in a flow-chart that a client program provides a socket, connects it with the server and start a communication,

Fig. 3 is a flow chart that the server-program starts communication of data when the server program is requested by a client,

Fig. 4 shows an example of control table used in an embodiment of the invention.

Fig. 5 shows a flowchart showing how trouble is removed by the client program at an occurrence of a trouble.

Fig. 6 shows a flowchart showing how trouble is removed by the server program at an occurrence of a trouble.

Fig. 7 is a drawing showing an idea how a combination of a virtual socket and real socket changes, when a communication trouble is removed.

Fig. 8 is a block diagram showing a communication system of prior art.

### DESCRIPTION OF THE EMBODIMENTS OF THE INVENTION

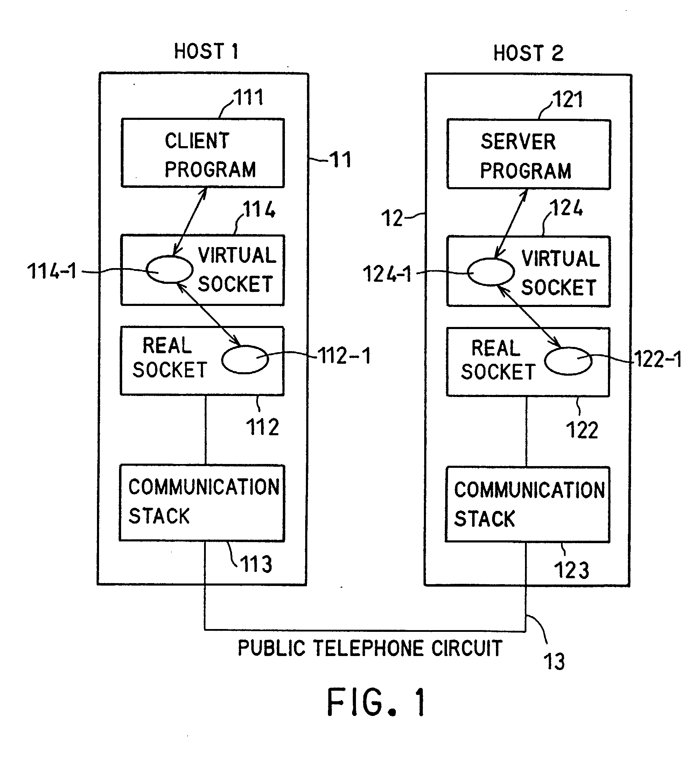

Fig. 1 is a block diagram showing an embodiment of the invention and shows a system that a data communication is made between a client (host 1) 11 and a server (host 2) 12 through a public telephone circuit. In this embodiment, a virtual socket module 114 (124) is inserted between the communication program 111 (121) which corresponds to the conventional communication program 711 (721) shown in Fig.8 and the real socket module, which corresponds to the conventional socket module 712 (721). In other words, the virtual socket module 114 (124) is inserted between the communication program 111 (121) and the socket module 112 (122); Such being the case, the virtual socket is a software which is regarded as a socket module from the side of the communication program 111 (121) and as the communication program 111 (121) from the side of the socket module 112 (122). The other components such as the communication stack 113 (123) and the public telephone circuit 13 are the same with the communication stack 713 (723) and the public telephone circuit 73. Therefore, the activation of the communication system shown in this embodiment of the invention will be described hereunder.

At first, the act on the side of the client host will be described.
The client program 111 uses a socket for making a communication with the server 12. The socket called up by the communication program 111 is a virtual socket module 114-1 according to the invention. As the virtual socket 114 acts as the conventional socket module against the communication program 111, the virtual socket is called up by the similar action to that the communication program 111 calls up the conventional socket.

The virtual socket module 114, which is called up from the communication program 111, calls up the real socket module 112, which is normal socket module, basing upon the parameter at the time of call-up.

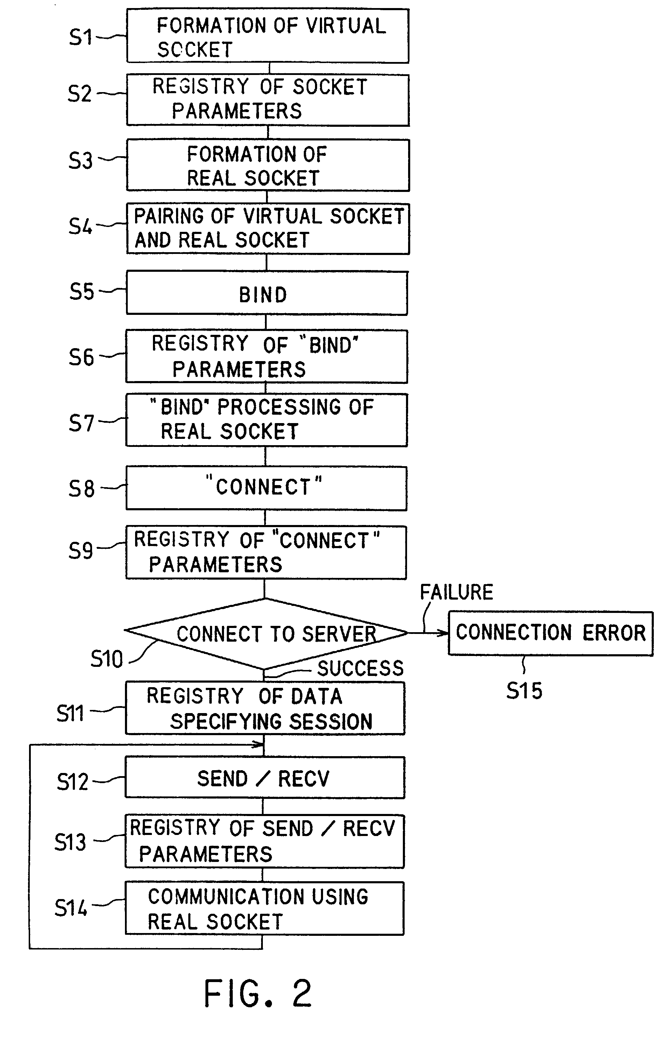

Fig. 2 is a flow-chart showing the procedures that a client program 111 provides a socket and connects it with the server and start a communication.

The client program 111 calls up the entry point of the virtual socket module 114, and forms a virtual socket 114-1 (Step S1). The virtual socket module 114 keeps the parameters, for example, network type, protocol, socket number etc. (Step S2), and calls up the socket entry point of the real socket module 112 and forms a real socket 112-1, which performs communication actually (Step S3).

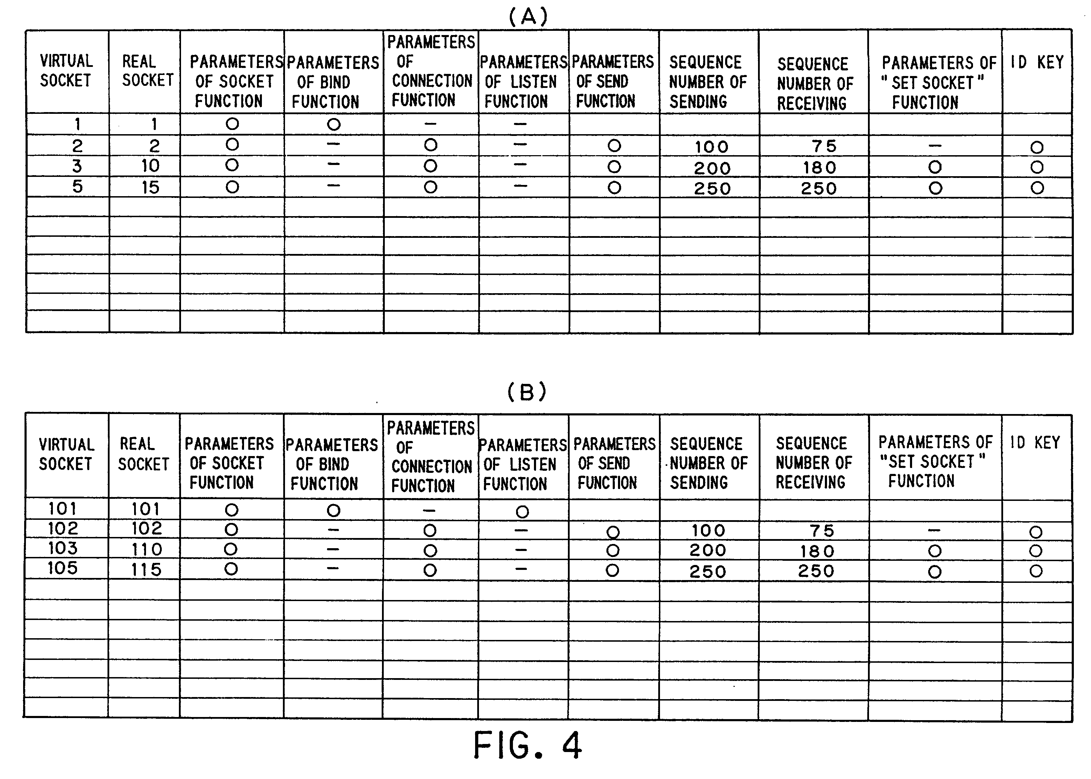

When the real socket 112-1 is formed successfully, correspondence between the virtual socket 114-1 and the real socket 112-1 is established (Step S4). This correspondence between the virtual socket 114-1 and the real socket 112-1 and the various data at the respective steps are registered and stored in the control table provided in the virtual socket module 114 as shown in Fig. 4.

Fig. 4 is a drawing showing an example of control table used in the virtual socket on the side of the client 11. At each line of said table the number of the virtual socket 114-1, the number of the corresponding real socket 112-1, and the various parameters used for the connection by means of these sockets are registered. On each line of the control table the above mentioned data are registered, whenever a connection between the client 11 and the server 12 is performed. For example, in the first and second columns of the first line the virtual socket No. 1 and the real socket No. 1 are registered as the correspondence. In the third and forth columns, socket function parameters and bind function parameters are registered. In the first and second columns of the second line, the virtual socket No. 2 and the real socket No. 2 are registered as the correspondence, and in the third and forth columns the socket function parameters and the bind function parameters are registered. Also in the fifth to tenth columns of the second line there are various parameters are registered as explained later. Here, the data registered in the first to forth lines shows that various data are registered according to the respective connections, every time when the connection between the client 11 and the server 12 is performed.

The registration to the control table at the respective steps of the flowchart of Fig. 2 is performed as shown in the second line of said control table. in other words, the virtual socket module 114 registers the virtual socket number 2 in the first column of the second line of the control table at the step 1, and registers the socket function parameters at the time of call-up of the entry point by means of the virtual socket module 114 in the third column of the second line of the control table at the step S2. Also, the virtual socket module 114 registers the real socket number 2 in the second column of the second line of the control table at the step 4, thus the correspondence between the virtual socket and the real socket is performed. also, the virtual socket module 114 returns the descriptor, for example, socket number to the client program 111. Thereafter, the client program 111 performs a communication using the socket number which is the descriptor of the virtual socket 1.

On next, the client program performs a bind operation through the obtained virtual socket. In this case, as in the case that the entry point of the socket is called up, bind entry point of the virtual socket module is called up. The bind entry point of the virtual socket module 114 registers the bind function parameters to be delivered in the control table shown in Fig. 4 (A) (step S6) and performs a bind process against the real socket 2 corresponding to the virtual socket 2. The bind process means the process that the parameters such as IP address of the host 1 comprising the client 11, the socket numbers and the port numbers are mutually corelated. When the bind is made successfully, a message that the bind of the virtual socket has been performed successfully is conveyed to the client program 111, which has called up.

The client program 111 which has recognized that the bind process has been performed, executes "connect" (Step S8), in order to connect to the server program 121 of the server (host 2) by means of the virtual socket 2. In other words, upon a call up by the entry point of the "connect", the virtual socket module 114, which has received a request of the "connect", stores the "connect" function parameters of the server 12 (host 2) such as IP address, port number, which have been transferred by the client program 111, in he fifth column of the second line of the control table (Step S9) as shown in Fig. 4(A), and performs a connection to the server 12 using the real socket 2 corresponding to the virtual socket 2.

When the connection with the server 12 is performed successfully, the virtual socket module 114 registers the data which specify the connection between the server and the client communication program in the 11th column of the second line of the control table shown in Fig. 4(A) (Step 11). This data is the ID key data such as session ID, process ID etc. which are necessary to restart correctly the communication session which has been connected between the client 11 and the server 12 before the trouble. When the "connect" of the real socket 2 is performed correctly, the virtual socket module 114 conveys the successful "connect" to the client program 111 and the client program 111 performs the communication (sending /receiving) of the data thereafter using the virtual socket 2.

For sending and receiving the data, send/recv entry point is used. As described in the above, the client program 111 calls up the send/recv entry point of the virtual socket module 114. The send/recv entry point of the called up virtual socket module 114 stores send function parameters received in the 6th column of the second line of the control table shown in Fig. 4 (A), at the same time, the send/recv entry point stores the communicated data tentatively in the control table. This can execute the re-communication of the data which could not be finished due to the trouble in order to finish the communication, after the circuit is reconnected. The virtual socket module 114 performs the communication of the data with the server 12 using the called up send/recv entry point of the real socket module 112 corresponding to the virtual socket module 114(Step S14). In this communication, sending sequence number and receiving sequence number of the communication are stored in 8th and 9th column of the second line of the control table. Meantime, in the 10th column of the second line of the control table the set socket option function parameters are stored for controlling the action mode of the socket such as the control for the flow of data.

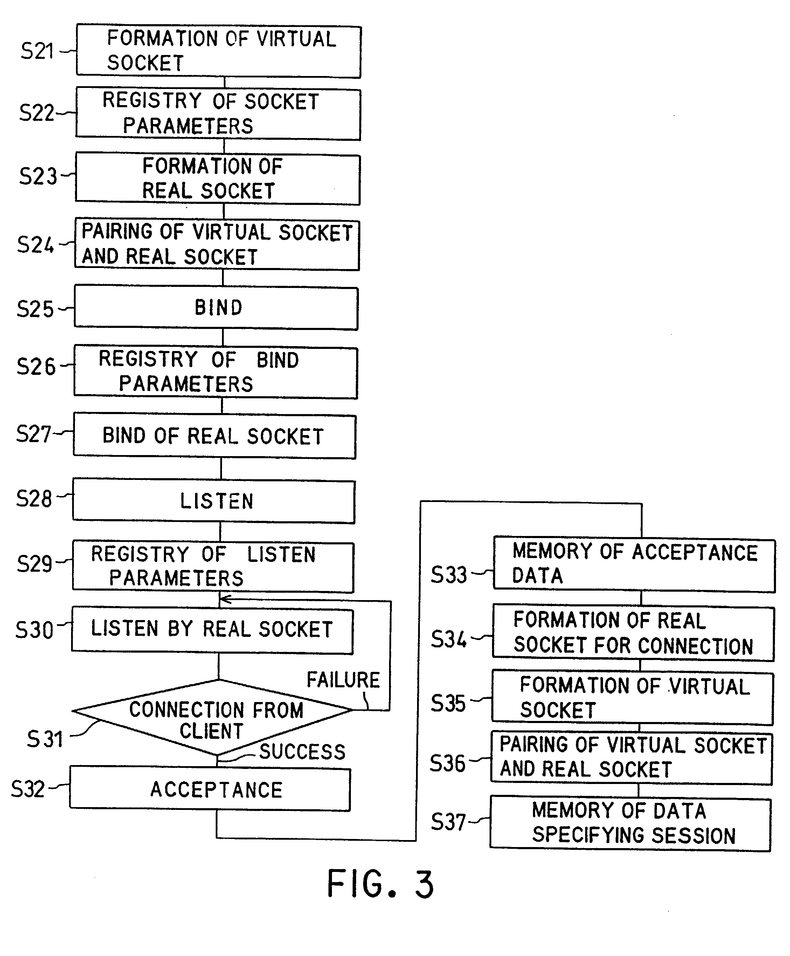

Then the action of the server program 121, which is a communication program of the server 12 side, is described. Fig. 3 is the flow chart, which shows the sequence that the server program 121 performs the circuit connection upon the request from the client 11 and start a communication of data.

The server program forms a pair of the virtual socket 124-1 and the real socket 122-1, which performs a communication actually, using the virtual socket module 123, same as in the case of the client program. In other words, the server program 121 calls up the socket entry point of the virtual socket module 124 and forms a virtual socket 124-1 (Step 21) and stores it as the virtual socket number 101 in the first column of the first line of the control table shown in Fig. 4 (B), wherein the control table in Fig. 4 (B)is the table used by the virtual socket module 124 on the side of the server 12. The virtual socket module stores the parameters at the time of call-up in the 3rd column of the 1st line of the control table (Step S22). Also, the virtual socket module 124 calls up the socket entry point of the real socket module 122 and forms a real socket 122-1, which executes a communication actually (Step S23).

When the real socket 122-1 is formed successfully, the virtual socket module 124 stores it as the real socket number 101 in the 2nd column of the 1st line of the control table and have the virtual socket 124-1 correspond to the real socket 101 as a pair (Step S24).

On the next stage the server program 121 performs a bind operation (Step S5) through the obtained virtual socket 101. In this case, as the socket entry point is called up, the bind entry point of the virtual socket module 124 is called up. The bind entry point of the virtual socket module 124 stores the bind function parameters which are delivered to, in the 4th column of the 1st line of the control table (Step S26) and performs a bind process to the real socket 101 which corresponds to the virtual socket 101. Here, the bind process means a process that IP address, socket number and port number are mutually correlated. If the bind is performed successfully, the server program which has called up, is informed that the bind process of the virtual socket has been performed successfully.

The server program 121 calls up the listen entry point through the formed virtual socket 124-1 (Step S28) and at the same time stores the listen parameters such as number of the connectable circuits in the 6th column of the 1st line of the control table (Step S26). At the listen entry point of the virtual socket module 124, a request for a connection from the communication program 111 is awaited using the real socket corresponding to the virtual socket (Step S 30). The communication program 121 on the side of the server 12 performs the steps from S21 to S29 in advance and waits for a request for the connection.

The request for a connection from the client 11 is received by the real socket 101 (Step S30) and the real socket 101 conveys the request for the connection the communication program 121 through the virtual socket module 124. When the server program 121 accepts the request for a connection (Step S31,S32), the entry point of accept is called up. The accept entry point of the virtual socket module 124, which was called up by the server program 121, stores the parameters such as IP address of the client 11, socket number etc. in the 7th column of the 1st line of the control table (Step S33) and gives a permission to the request for a connection. The real socket module 122 forms a new real socket such as the real socket 110, for example, to perform a communication with the client 11 basing upon the accept process of the virtual socket module 124 (Step S34). The virtual socket module 124 forms a virtual socket 103 corresponding to the real socket made by the accept process, such as the virtual socket 103 and inform the server program 121 of the forming of the virtual socket 103 and at the same time stores these socket number in the 1st, and 2nd column of the 3rd lines, for example, to have those correspond to each other (Step S36). The server program 121 stores the data specifying the opponent client 11 in the column of the ID key (Step S37).

Thereafter, the server program 121 performs the communication using send/recv entry point is the same way as in the action by the client program 111 of Step S12 to S14 in Fig. 2.

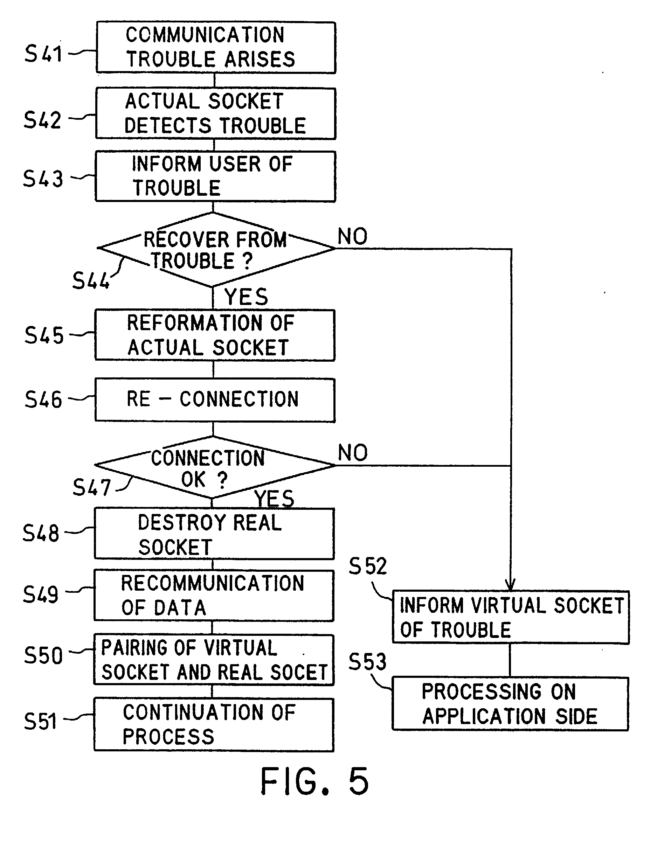

Fig. 5 is the flow-chart showing the recovery process on the side of the client when the communication trouble has arisen. The detection of the communication trouble is performed by the real socket 112-1 in the state that the client 11(host 1) and the server 12 (host 2) are mutually connected and the communication process is performed actually. The virtual socket module 114 is informed of the trouble , for example, a breaking of the public circuit which has been detected by the real socket 112-1. The virtual socket module 114 finds out the virtual socket 114-1 corresponding to the real socket 112-1. from the control table shown in Fig. 4 (A). In this case, for example, it is assumed that a trouble is detected by the real socket number 3, and the virtual socket number corresponding to said real socket number 3 is 3. The virtual socket module 114 inquires of the user of the client program 111 through the display of the host 1 as to whether or not the process of the client program should be continued.

In case that the user is not desirous to continue the process, the virtual socket module 114 informs the client program 111 of it through the virtual socket 3 concerning the communication trouble. The ordinary process thereafter regarding the communication trouble is carried out by the client program 111 and the server program 121 respectively.

In case that the user of the program is desirous to continue the process, when the circuit is broken, the virtual socket module performs a redial-up in order to make a re-connection. At this moment, when the platform in which the program is operated, is provided with an address procurement system such as DHC, there is a possibility that the IP address of the host might change.

When the circuit is re-connected, the virtual socket module 114 forms a new real socket basing upon the socket forming data which have been stored before the trouble arose (Step S 45). At this moment, the real socket which is formed newly, is given a different control number from the one, which the real socket owned before the trouble arose. For example number 10 is given as shown in Fig. 4 (A). This newly formed real socket 10 provides a connection with the opponent communication partner, that is, the server program 121 (Step S 46). At this moment, the data which specify the connecting part and the part to be connected, in other words, data ID keys for confirming that the communication partners which communicated before the trouble arose, are again connected, are exchanged to confirm the partner each other (Step S47). The right programs are connected again, the virtual socket 114 destroys the real socket 3 (Step 48), performs the re-communication from (with) the back-up data, in which the data, which processing had not finished before the trouble, are stored, and finish the communication of the data, which has been interrupted.

When the data exchange becomes possible between the client program 111 and the server program 121, by the newly formed real socket 10, the virtual socket 3, which corresponded to the real socket 3 that was destroyed through the trouble, is made correspond to the newly formed real socket 10 as a new pair (Step S50), and the pair is registered in the control table as shown in Fig.4 and thereafter the process of communication is continued according to this combination (Step S51).

Though, as described in the above, there is a case that IP address of the platform and the socket number may change by the re-formation of the socket at the time of the re-connection of the communication circuit, only the virtual socket 3 can be seen from the side of the client program 111, and the correspondence between the virtual socket 3 and that of the new real socket 10 is controlled within the virtual socket module 114, the client program 111 needs just to perform an access to the virtual socket module 114, according to the data before the occurrence of the trouble. In this way, it can look as if the communication process is continued without interruption, while the occurrence of the trouble and the difference between the before and after the trouble are suppressed.

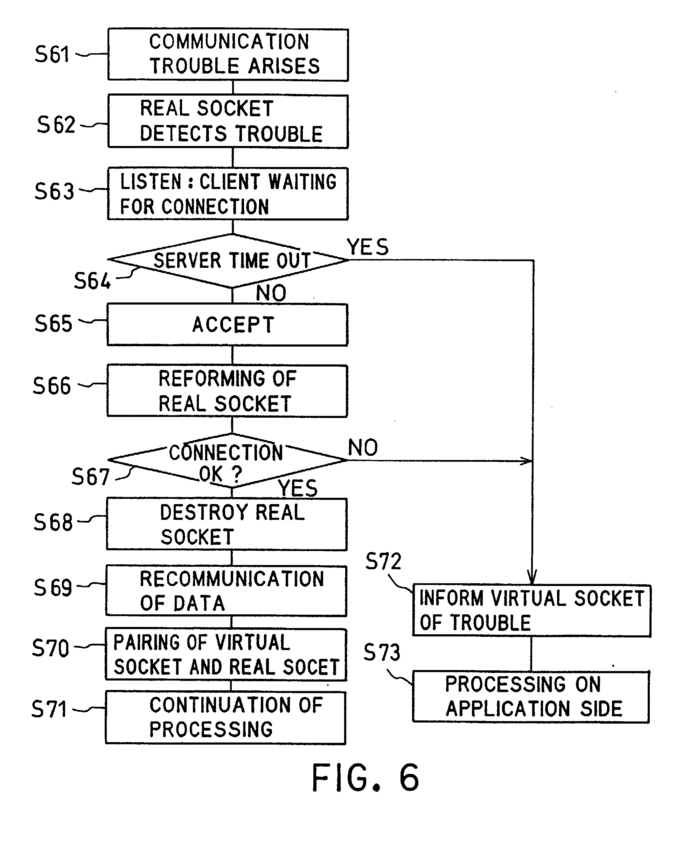

Fig. 6 is a flow-chart showing the recovery process on the side of the server at the time of trouble occurrence. The detection of the communication trouble should be carried out by the real socket which performs the communication, for example, by the real socket 115 as shown in 4th line of the control table in Fig.4 (B) (Step S62). The communication trouble which was detected by the virtual socket module 115, such as the trouble due to the breakage of the public circuit, is conveyed to the virtual socket module 124. The virtual socket module 124 is waiting for a re-connection from the client 11 using the real socket for "listen"(Step S63).

In this case, when no re-connection from the client takes place within a certain time, the virtual socket module 124 is to inform the server program of the host 2, that there was a communication trouble, through the virtual socket 105 corresponding to the real socket 115, which detected the trouble. Thereafter, the trouble recovery process is performed on the side of the communication program 121 (Step S73).

When the re-connection from the client 11 takes place, the virtual socket module 124 carries out the "accept" process (step S65) and reform a real socket 120 (Step S66). The newly formed real socket 120 performs a connection with the client program of the communication partner. At this moment, data that specify the connecting part and the partner to be connected, that is, the data of ID key for confirming that the communication partners before the trouble are re-connected, are exchanged to confirm the partners each other( Step S67). After the re-connection is performed, a pair of the virtual socket 105 and the real socket 115 corresponding to the destroyed session is detected from the control table according to the data of ID key transferred by the client 11, and the real socket 115, which detected the trouble, is destroyed in the same way as in the case of the virtual socket module 114 of the client (Step S68).

Through the virtual socket 105 corresponding to the destroyed real socket 115, the data which has not transmitted before the trouble occurred, are retransferred from the back-up data to finish the communication interrupted.

When it becomes possible to data exchange between communication programs through the newly formed real socket, the virtual socket 105 corresponding to the real socket 115, which was destroyed due to the communication trouble and the newly formed real socket 120 are related as a corresponding pair which performs the continuation of the communication process (Step 71).

When the communication circuit is re-connected, IP address of the platform and the socket number might change due to the re-forming of the socket, only the virtual socket 124 can be seen from the communication program and the correspondence between the virtual socket 124 and the real socket 122-2 is controlled within the virtual socket module 124, the server program 121 needs just to make an access to the virtual socket 124 according to the data before the communication trouble. In this way, it can look as if the communication process is continued without interruption, while the occurrence of the trouble and the difference between the before and after the trouble are suppressed.

Either when the program of the communication partner to be re-connected cannot be specified as the communication program connected before the occurrence of the trouble, or when the trouble recovery is not performed within a certain time from the occurrence of the trouble, the virtual socket module 124 is to inform the server program 121 of the communication trouble, and thereafter the measures for communication trouble are performed by the server program 121 and the client program 111 respectively.

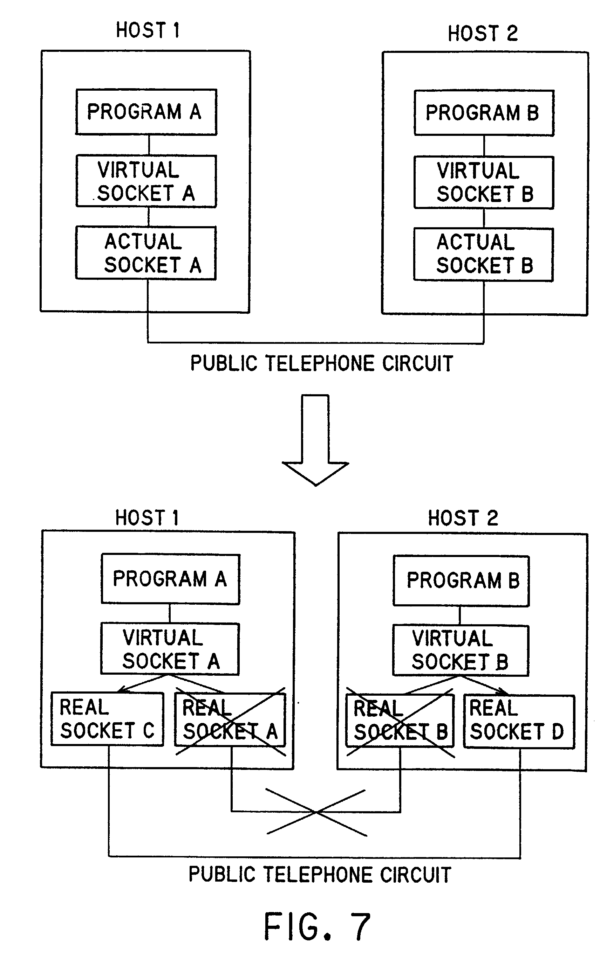

Fig. 7 is a drawing showing how the combination of said virtual socket and the real socket changes, when the communication trouble is processed for recovery.

The drawing shows the situation that two programs are performing a communication each other before the trouble arises. The program A which is acting in the host 1, performs a communication with the program 2 which is operating in the host 2. Similarly the program B performs a communication using the real socket B which forms a pair of the virtual socket B. The host 1 and the host 2 are connected by a public telephone circuit by dialing up. It is assumed that the dial-up connection with the public telephone circuit is interrupted due to a communication trouble and the recovery process for the communication trouble is performed as described in the above.

The real socket A and B, which were used at the time of the trouble were destroyed and new real sockets C and D are formed. The public telephone circuit becomes a new circuit, as the connection re-dials up. The newly formed real sockets C and D perform a new pairing of the virtual sockets A and B corresponding to the pair of the real sockets A and B. As only the virtual sockets A and B can be seen from the communication program A and B, the fact that the real sockets are reformed due to the recovery process for the communication trouble, is suppressed, and the the continuation of the process by the communication program becomes possible using the virtual sockets A and B.

Meantime, the communication program 111 (121), the virtual socket module 114 (124), socket module 112 (122), the communication stack 113 (123), which are shown as an embodiment of the invention, are all realized in a software, especially the flowchart shown in Figs. 4 and 5 is embodied in the software as a program as a means for realizing the invention, which are provided in the form of memory media such as floppy discs, magnetic discs, CD-ROM, Mo etc.

The invention is characterized by that on the respective host computers 11 (12) performs the continuation for the communication, wherein, their own communication programs 111 (121) are provided with the virtual socket 114 (124) used as communication ports by the communication program 111 (121) and the real socket 112 (122) which corresponds to the virtual socket at one to one correspondence and which is used as the communication port to perform the real communication process; when the communication program instructs the virtual socket to perform a data communication, the communication is executed using the real socket forming a pair of said virtual socket, when the communication trouble arose, the used real socket is destroyed, and a new real socket is formed, a combination with the virtual socket corresponding to the real socket, which was used before the trouble is renewed, and the data communication is continued using the newly formed real socket, through which the total throughput of the communication system is improved.

Meantime, though only the communication recovery at the time of trouble was described in the above, the invention is not limited to such application but an application to cryptographic communication can be considered. Specifically, the virtual module which controls the virtual sockets, receives when it is requested by the communication program to make a communication, encoding the communication data to be stored in the virtual socket module, and the communication is performed using the real socket corresponding to the virtual socket at one-to-one correspondence. In this way, it is also possible to make a cryptographic communication using the communication program which is not provided with a cryptographic communication function.

As described in the above, according to the invention, the communication programs can perform the recovery of the communication trouble and the continuation of the process, by communicating between the real sockets used as communication ports for performing the real communication process through the virtual sockets, while suppressing from the communication programs the difference of the situations between before and after the recovery, caused by re-dial-up, re-procurement of the IP-address, reforming of the sockets, re-connection of the communication programs etc. and the communication programs do not recognize the occurrence of the trouble. Accordingly. not only the reliability but also the total throughput of the communication system can be improved.

## Claims

1. In a communication system using socket modules between a server program of a server computer and a client program of a client computer having a real socket module controlling the real sockets used as a port for a communication and a communication stack which connects the socket with the real socket of computer of the opponent partner, the communication system is characterized in that a virtual socket module is provided for controlling the virtual sockets corresponding to the real sockets and existing between said communication program and the real socket as an interface so that the communication program instructs the virtual socket to perform a data communication, and that the virtual socket module further comprises;
means for performing a communication using the real socket ,
means for storing the data regarding the connection in the communication and the socket parameters,
destroying the real socket used at the time of trouble occurrence;
means for forming a new real socket using the connection data and socket parameters,
and means for establishing a correspondence between the new real socket and the virtual socket used before the occurrence of the trouble, so that the data communication is continued using the newly formed real socket.

2. The communication system according to the claim 1, wherein the communication data including the specifying the communication program of the opponent partner of the communicating are stored, when a communication is requested by said communication program.

3. The communication system according to the claim 2, wherein the data specifying the opponent partner is at least one of communication data such as address, port number of the real socket etc.

4. The communication system according to the claim 3, wherein the communication trouble is recovered by the virtual socket module of the client computer by forming a new real socket basing upon the address, port number which are stored in the virtual socket module, instead of the real socket which detected the trouble at the time of trouble occurrence, and at the same time, by continuing the data communication while forming a pair with the virtual socket which was used at the time of the trouble occurrence, and without having the communication program using said virtual socket recognize the occurrence of the trouble and the change of the socket.

5. The communication system according to the claim 2, wherein the real socket module of the server program at said server computer performs the communication of the data which are stored in said virtual socket module, through a new real socket using the data specifying the communication partner, which were stored in the virtual socket module at the client computer, by specifying the corresponding virtual socket, which was used before the trouble, and the communication is continued by forming a new virtual socket and real socket, and without having said communication program recognize that the real socket has been changed.

6. The communication system according to the claim 1, wherein at the time of the trouble occurrence, the program user is informed that trouble arose, and the program-user is requested to select whether or not the trouble should be recovered, and in the negative case, the error process is started by informing the communication program of the trouble and in the positive case, the communication process is continued by recovering the communication trouble without having the communication program recognize the occurrence of the communication trouble and the recovery.

7. The communication system according to the claim 2, wherein the virtual socket module controlling the virtual sockets receives the data, when the virtual module is requested to make communication, and perform an encoding of the communication data, which are stored in the virtual socket module, and executes the communication using the real socket corresponding to the virtual socket at one-to-one correspondence.

8. In a method for recovering from the communication trouble in the communication system performing data communication using a real socket module, it is characterizing in that a virtual socket module corresponding to the real socket module is provided between a server program of a server computer and a client program of a client computer for performing the data communication comprising steps of;
storing the parameters at the time of forming the virtual socket;
forming a real socket, which performs the communication actually by the virtual socket module;
establishing a correspondence between the virtual socket and the real socket;
performing a bind process for the real socket corresponding to the virtual socket by storing the parameters delivered by said client program;
storing the data specifying the connection while a connect process is performed with the opponent communication partner using the virtual socket;
performing the data communication using the real socket corresponding to the virtual socket.

9. In a method for recovering from the communication trouble in a data communication system using a real socket module, it is characterizing in that a virtual socket module corresponding to the real socket module is provided between a server program of a server computer and a client program of a client computer for performing the data communication comprising the steps of;
forming a virtual socket by the server program;
storing the parameters at the time of the formation of the virtual socket;
forming a real socket which performs the communicating actually;
establishing a correspondence between the virtual socket and the real socket;
storing the parameters delivered by the server program ;
performing a bind process for the real socket corresponding to the virtual socket;
awaiting a request for the connection from the opponent partner using the real socket corresponding to the virtual socket;
forming a new real socket for the purpose of communication with the opponent partner basing upon the parameters delivered by the client computer, when the request for the connection is accepted;
storing at the same time, the data specifying the partner of the communication; and
performing a communication of the data while a new virtual socket corresponding to the real socket is formed.

10. In a method for recovering from the communication trouble in the communication system performing data communication using a real socket module, it is characterizing in that a virtual socket module corresponding to the real socket module is provided between a server program of a server computer and a client program of a client computer for performing the data communication comprising the steps of;
detecting the communication trouble by the real socket in the client computer;
requesting the user of the program to express whether or not the recovery from the communication trouble should be performed;
starting the error removing process while informing the communication program of the trouble, when the user of the program expressed negatively;
forming a new real socket while the real socket used at the time of the trouble is destroyed, when the user of the program expressed positively;
establishing a correspondence between the virtual socket used together with the real socket before the trouble arose and the new real socket; and
continuing the data communication using the newly formed real socket.

11. In a method for recovering from the communication trouble in the communication system performing data communication using a real socket module, it is characterized in that a virtual socket module corresponding to the real socket module is provided between a server program of a server computer and a client program of a client computer for performing data communication comprising the steps of;
detecting the communication trouble by the real socket of the client computer;
performing the connect process by forming a real socket;
confirming the opponent partner which is connected before the trouble is re-connected;
destroying the real socket used at the time of trouble;
transferring the data which were not transferred but stored in the back-up data before the trouble until the interrupted communication of the data is finished;
establishing a correspondence between the real socket; and
continuing the data communication using the newly formed real socket.

12. In a computer readable recording medium storing a program for implementing a method for recovering from the communication trouble in the communication system performing data communication using a real socket module, it is characterized in that the method uses a virtual socket module corresponding to the real socket module between a server program of a server computer and a client program of a client computer and comprises the steps of;
forming a virtual socket by the client program ;
registering parameters at the time of the formation of the virtual socket ;
forming a real socket, which performs the communication actually, by the virtual socket module;
establishing a correspondence between the virtual socket and the a real socket;
performing a bind process for the real socket corresponding to the virtual socket, while the parameters delivered by said client program are stored;
performing a connect process with the opponent partner using the virtual socket;
storing the data specifying the connection and data of the communication once stored in the virtual socket module; and
performing the data communication using the real socket corresponding to the virtual socket.

13. In a computer readable recording medium storing a program for implementing a method for recovering from the communication trouble in the communication system performing data communication using a real socket module, it is characterized in that the method uses a virtual socket module corresponding to the real socket module between a server program of a server computer and a client program of a client computer and comprises the steps of;
forming the virtual socket by the server program;
registering parameters at the time of the formation of the virtual socket;
forming a real socket, which performs real communication, by the virtual socket module;
establishing a correspondence between the virtual socket formed and the real socket;
storing parameters delivered by the server program;
performing a bind process for the real socket corresponding to the virtual socket;
awaiting a request for a connection using the real socket corresponding to said virtual socket;
storing data for specifying the opponent connection partner, while forming a new real socket for a communicating with the partner according to the parameters delivered by the client computer and at the same time,
storing data specifying the partner , when the request for a connection is accepted;
performing the data communication , while a new virtual socket is formed corresponding to the real socket.

14. In a computer readable recording medium storing a program for implementing a method for recovering from the communication trouble in the communication system performing data communication using a real socket module, it is characterized in that the method uses a virtual socket module corresponding to the real socket module between a server program of a server computer and a client program of a client computer and comprises the steps of;,
detecting communication trouble by the real socket at the client computer;
requesting the user of the program to express whether or not the trouble should be removed;
starting an error removing process for the communication program while informing the communication program of the trouble, when the user of the program expressed negatively;
forming a new real socket, when the user of the program expressed that communication should be recovered;
destroying the real socket used at the time of the trouble;
establishing a correspondence of the real socket with the virtual socket used together with the real socket before the trouble; and
continuing the data communication using the newly formed real socket.

15. In a computer readable recording medium storing a program for implementing a method for recovering from the communication trouble in the communication system performing data communication using a real socket module, it is characterized in that the method uses the virtual socket corresponding to the real socket module between a server program of a server computer and a client program of a client computer and comprises the steps of;
detecting the communication trouble by the real socket at the client computer;
confirming whether or not the connection with the partner, with which communication was made before the trouble, is reconnected, while the connect process is performed by forming newly a real socket upon the reconnection;
destroying the real socket used at the time of the trouble; and
continuing the data communication using the newly formed real socket.

16. A method of communicating data between computers in which socket modules are used to form communication ports at each end of the communication circuit, characterised in that each socket module includes a virtual socket which acts as an interface between the communication program and the real socket, the virtual socket including means for storing data relating to the circuit connection between the computers, and means for deleting the real socket and creating a new real socket using the stored data in the event of an error in the communication process.
